# EUROPÄISCHE PATENTSCHRIFT

(11) **EP 0 572 609 B1**
(45) Veröffentlichungstag und Bekanntmachung des Hinweises auf die Patenterteilung: **12.03.1997**
(21) Anmeldenummer: 93900117.8
(22) Anmeldetag: 21.12.1992
(51) Int. Cl.: C21C 5/52, F27D 3/00, F27B 3/18, C21C 5/56, F27D 17/00

(54) **VERFAHREN ZUM EINSCHMELZEN VON SCHROTT, SOWIE VORRICHTUNG ZUR DURCHFÜHRUNG DIESES VERFAHRENS**
PROCESS AND DEVICE FOR MELTING SCRAP
PROCEDE ET DISPOSITIF DE FONTE DE FERRAILLE

(30) Priorität: 20.12.1991 AT 2547/91
(43) Veröffentlichungstag der Anmeldung: 08.12.1993
(73) Patentinhaber: VOEST-ALPINE INDUSTRIEANLAGENBAU GMBH, 4020 Linz (AT); MERCEDES-BENZ AG, 70327 Stuttgart (DE)
(72) Erfinder: VON BOGDANDY, Ludwig, A-4020 Linz (AT); FISCHER, Jens-Uwe, D-1000 Berlin 28 (DE); NIEDER, Wolfgang, A-4040 Linz (AT); WINKLER, Manfred, A-4501 Neuhofen (AT)
(74) Vertreter: Haffner, Thomas M., Dr.
(86) Internationale Anmeldenummer: AT9200171
(87) Internationale Veröffentlichungsnummer: WO9313228

(56) Entgegenhaltungen:
- EP-A- 0 373 378
- DE-A- 2 830 720
- FR-A- 1 553 354

## Beschreibung

Die Erfindung bezieht sich auf ein Verfahren zum Einschmelzen von Schrott, insbesondere von Autoschrott, bei welchem die Charge stückig bzw. als Pakete durch ein einen geschlossenen Deckel durchsetzendes Chargier - bzw. Zuführungsrohr aufgegeben wird, wobei auf eine hierdurch gebildete Schrottsäule Brenner gerichtet sind und die Abgase und Pyrolysegase konzentrisch zur Schrottzuführung abgezogen werden, sowie exzentrisch zur Schrottzuführung Elektroden zur Erhitzung des Schmelzbades vorgesehen sind, sowie auf eine Vorrichtung zur Durchführung dieses Verfahrens.

Aus der DE-AS 26 08 279 ist ein Verfahren zum Einschmelzen von Stahl aus Schrott im Elektroofen bekanntgeworden, bei welchem der Schrott vor dem Chargieren auf Temperaturen von über 700°C vorgewärmt wird, und im Ofen mit einer ständig dort verbleibenden, reaktionsfähigen, flüssigen Schlacke gearbeitet wird, welche bis zu 220°C über ihre Liquidustemperatur und bis zu 100°C über die Stahlabstichtemperatur überhitzt wurde. Der verwendete Elektroofen weist in der Mitte angeordnete Elektroden auf, und es wird außermittig sowohl in Form von Paketen als auch in Form von zerkleinertem Schrott chargiert. Die Zufuhr der Charge erfolgt hiebei über den Deckel durchsetzende Rohre.

Aus der DE-A1-38 39 095 ist ein Verfahren zum Betrieb eines Einschmelzaggregates bekanntgeworden, bei welchem Chargiergut durch eine Beschickungsöffnung außermittig in einen Elektroofen eingebracht wird. Die Beschickungsöffnung wird hiebei als Schacht ausgebildet und dient gleichzeitig dem freien Gasauslaß, wobei die Chargiergutsäule im Wärmeaustausch mit den heißen Gasen des Ofens vorgewärmt wird. Eine analoge Einrichtung ist im übrigen auch der DE-A1-38 39 096 zu entnehmen.

Wenngleich mit den oben beschriebenen Einrichtungen bzw. Verfahrensweisen bereits die Möglichkeit geschaffen wird, bei geschlossenem Deckel eines Ofens den Ofen zu füllen, bestehen erhebliche Probleme in der sicheren Ableitung von Abgasen des Schmelzprozesses. Insbesondere für den Fall, daß als Chargiergut Autoschrott eingesetzt wird, muß darüberhinaus mit der Problematik gerechnet werden, daß die in einem derartigen Schrott enthaltenen Kunststoffanteile bei der Pyrolyse eine Reihe von toxischen Schadstoffen ergeben.

Die Erfindung zielt nun darauf ab, ein Verfahren der eingangs genannten Art zu schaffen, mit welchem es gefahrlos möglich ist, auch kunststoffhaltigen Schrott zu chargieren, wobei gleichzeitig, insbesondere bei der Verwendung von Kunststoff, darauf abgezielt wird, die Brennwärme derartiger organischer Kunststoffe für das Schmelzen des Schrottes mitzuverwenden, um die Bildung toxischer Schwel- bzw. Pyrolysegase hintanzuhalten. Zur Lösung dieser Aufgabe besteht die erfindungsgemäße Verfahrensweise im wesentlichen darin, daß die Schrottsäule im Inneren des Ofens durch Anheben und Absenken eines Chargierrohres in bezug auf ihren Durchmesser in Abhängigkeit von der Reaktivität der organischen Bestandteile derart eingestellt wird, daß zu Beginn des Schmelzprozesses mit den Gas - oder Kohlenstaubbrennern die Schrottsäule soweit erhitzt wird, daß anschließend die organischen Anteile durch Erhöhen der Sauerstoffmenge verbrannt werden und durch die Verbrennung ein Schmelzen des Schrottes erfolgt, und daß die Schmelze anschließend im Bereich der relativ zur Schrottsäule versetzt angeordneten Elektroden weiterbehandelt bzw. raffiniert wird. Einrichtungen, bei welchen eine Schurre bzw. ein Chargierrohr relativ zu einer Aufgabestelle beweglich angeordnet sind, sind prinzipiell bekannt. Bekannte Einrichtungen dieser Art dienen allerdings dazu, eine übermäßige Staubentwicklung beim Abwerfen von feinkörnigem Chargiergut zu verhindern. Dadurch, daß nun erfindungsgemäß ein Chargierrohr vorgesehen ist, dessen Unterkante relativ zur Oberfläche des Schmelzbades angehoben oder abgesenkt werden kann, wird nun die Möglichkeit geschaffen, die Schrottpakete bzw. das Chargiergut in einer Weise einzubringen, daß eine mehr oder minder dicke Säule entsteht. Dadurch, daß nun Brenner auf diese Säule des Chargiergutes gerichtet werden, wird die Schmelzarbeit von derartigen Brennern geleistet, wobei die Verwendung derartiger Brenner gleichzeitig die Möglichkeit bietet, je nach dem Anteil an verbrennbarem Kunststoff im Chargiergut die Sauerstoffzufuhr entsprechend zu adjustieren, um eine energieliefernde Verbrennung der mitchargierten Kunststoffanteile zu gewährleisten. Gleichzeitig kann mit derartigen Brennern und zusätzlicher oder sogar substitutiver Zuführung von Sauerstoff eine Verfahrensweise gewährleistet werden, bei welcher eine vollständige Verbrennung der Kunststoffanteile gewährleistet wird, ohne daß auf Grund zu niedriger Temperaturen Schwelgase bzw. Pyrolyseabgase entstehen. Dadurch, daß nun die Schrottsäule mit derartigen Brennern oder durch Sauerstoffzufuhr eingeschmolzen wird, wird ein Bad erzielt, welches in der Folge im Lichtbogenofen entsprechend überhitzt oder raffiniert werden kann. Dadurch, daß im Anschluß an das Einschmelzen mittels der genannten Brenner bzw. Sauerstofflanzen eine Weiterbehandlung bzw. Raffination mit relativ zur Schrottsäule versetzt angeordneten Elektroden erfolgt, wird gleichzeitig sichergestellt, daß die Weiterbehandlung bzw. Raffination nicht durch den Einschmelzprozeß selbst beeinträchtigt wird, und sichergestellt, daß beide Vorgänge in einem gemeinsamen Ofen durchgeführt werden können. Die räumliche Trennung von Elektroden und Brennern bzw. Sauerstofflanzen hat hiebei den Vorteil, daß die Verbrennungsvorgänge die Elektroden in keiner Weise beeinträchtigen, und daß weiters beim Chargieren in einem Bereich mit Brennern und/oder Sauerstofflanzen chargiert wird, wodurch auch eine mechanische Beschädigung der Elektroden bzw. die Notwendigkeit des Ausfahrens der Elektroden beim Chargieren entfällt.

Um bei einer derartigen Verfahrensweise sicherzustellen, daß das Chargierrohr auch dann den hohen Beanspruchungen standhält, wenn es längere Zeit nahe der Badoberfläche gehalten werden muß, wird mit Vorteil so vorgegangen, daß im Gleichstrom mit dem Schrott Kühlluft durch das Chargierrohr geführt wird.

Wie bereits eingangs erwähnt, kann die Erhöhung der Sauerstoffmenge zur Verbrennung der organischen Anteile der Charge so weit gehen, daß der ursprünglich eingetragene Brennstoff zur Gänze durch Sauerstoff ersetzt wird. Mit Vorteil wird daher die Erfindung so durchgeführt, daß das zu Beginn des Schmelzprozesses zugeführte Brenngas bzw. der Kohlenstaub nach Erreichen einer Temperatur, welche für die Verbrennung des Kunststoffanteiles ausreicht, vollständig durch Sauerstoff ersetzt wird.

Für den Raffinationsprozeß bzw. Frischprozeß und für einen geregelten Abstich, und insbesondere für eine kontinuierliche oder semikontinuierliche Verfahrensführung, ist es von wesentlicher Bedeutung, wenn innerhalb des Bades weitestgehend homogene Bedingungen erzielt werden. Um eine derartige Verbesserung der Homogenität im Bad bei nebeneinander ablaufenden, verschiedenen thermischen Prozessen zu gewährleisten, wird mit Vorteil so vorgegangen, daß zusätzlicher Sauerstoff gegebenenfalls brennbare Gase oder Inertgas, insbesondere zur Badumwälzung im Bereich der Elektroden, über Bodendüsen eingeblasen wird, wobei weiters mit Vorteil die auf die Charge gerichteten Brenner auf die Oberfläche der Schmelze gerichtet sind; insbesondere bei Verwendung von Kohlenstaubbrennern kann mit einer derartigen Verfahrensweise auch in bestimmten Grenzen der Kohlenstoffgehalt des Schmelzbades eingestellt werden.

Die erfindungsgemäße Vorrichtung zur Durchführung dieses Verfahrens ist gemäß Anspruch 6 ausgebildet und dadurch gekennzeichnet, daß das den Deckel durchsetzende Zuführungsrohr mit einem Antrieb zur Höhenverstellung der Unterkante des Zuführungsrohres verbunden ist und in einer Glocke bzw. einem dichtend an den Deckel angeschlossenen Außenrohr geführt ist, an welche(s) eine Gasabzugsleitung angeschlossen ist.

Die Höhenverstellung der Unterkante des Zuführungsrohres bzw. Chargierrohres kann hiebei in konstruktiv besonders einfacher Weise so ausgebildet sein, daß das Zuführungsrohr aus relativ zueinander verschiebbaren teleskopierenden Abschnitten besteht und gegebenenfalls im Bereich der Mündung einer Aufgabeschurre ein sich in axialer Richtung erstreckendes Langloch aufweist. Die Maßnahme, ein in axialer Richtung erstreckendes Langloch an einer Seite des Zuführungs- bzw. Chargierrohres vorzusehen, dient hiebei dazu, die Höhenverschiebung des Rohres ohne Behinderung durch die Aufgabeschurre zu gewährleisten. Eine derartige Ausbildung hat jedoch den Nachteil, daß die Zufuhr von Kühlluft die Unterkante des Zuführungsrohres nur unzureichend bestreicht. Im Zusammenhang mit der gewünschten Zuführung von Kühlluft ist daher die Verwendung eines teleskopierbaren Zuführungs- bzw. Chargierrohres vorteilhafter, weil hier mit Druck Kühlgase bzw. Kühlluft bis in den Bereich der Mündung des Zuführungs- bzw. Chargierrohres eingebracht werden können, wofür vorteilhafterweise die Ausbildung so getroffen ist, daß an die Schurre eine Druckgas-, insbesondere Druckluftquelle, angeschlossen ist. Um den Austritt von Kühlgas in Richtung der Gasabzugsleitung hintanzuhalten, ist die Ausbildung mit Vorteil so getroffen, daß das in Achsrichtung verschiebbare bzw. höhenverstellbare Zuführungsrohr an seinem oberen der Glocke bzw. dem Außenrohr zugewandten Ende durch eine Stirnplatte verschlossen ist.

Gemäß einer weiteren bevorzugten Ausführungsform der erfindungsgemäßen Vorrichtung ist im Ofen zwischen der Achse des Zuführungsrohres und den Elektroden eine Barriere bzw. ein Wehr angeordnet, welche(s) in das Schmelzbad eintaucht und sich im wesentlichen diametral erstreckt. Auf diese Weise wird eine Trennung der beiden metallurgischen Vorgänge des Aufschmelzens und des Raffinierens erreicht, wobei das Wehr bzw. die Barriere die Möglichkeit bietet, im Raffinations- bzw. Frischprozeß mit einer Schlacke von gegenüber dem Einschmelzprozeß verschiedener Zusammensetzung zu arbeiten.

Mit Vorteil ist die Ausbildung im Einschmelzbereich so getroffen, daß Brenner bzw. Lanzen zur Achse des Zuführungsrohres unterhalb der tiefsten Stellung der Unterkante des höhenverstellbaren Bereiches des Zuführungsrohres gerichtet sind, wobei vorzugsweise die Brenner bzw. Lanzen vorzugsweise im Halbkreis um die Achse des Zuführungsrohres an der den Elektroden abgewandten Seite desselben angeordnet sind. Mit einer derartigen Ausbildung wird eine gute thermische Durchwirbelung im Gasraum des gesamten Elekroofens erzielt, wodurch ein guter Energienutzungsgrad erzielt wird.

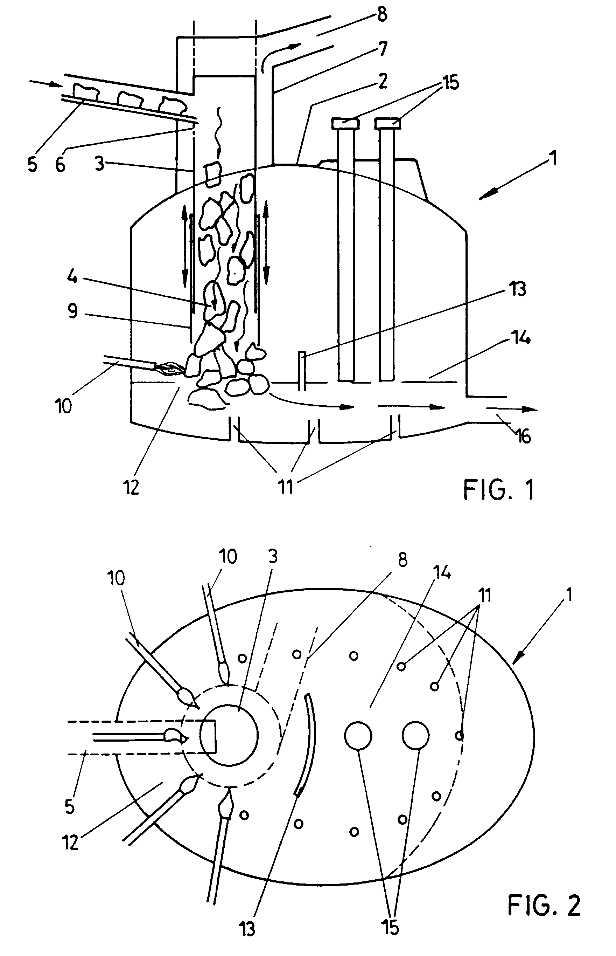

Die Erfindung wird nachfolgend an Hand einer in der Zeichnung schematisch dargestellten Ausführungsform zur Durchführung des erfindungsgemäßen Verfahrens näher erläutert. In dieser zeigen: Fig.1 einen schematischen Schnitt durch eine erfindungsgemäße Einrichtung zum Einschmelzen von Schrott, und Fig.2 eine Draufsicht auf eine Einrichtung gemäß Fig.1.

In Fig.1 ist mit 1 ein Ofen dargestellt, durch dessen Deckel 2 ein Chargierrohr 3 in das Innere des Ofens mündet. Das Chargierrohr 3 ist hiebei so ausgebildet, daß es über eine, nicht dargestellte, Hebe- und Senkvorrichtung heb- und senkbar ist, um durch das Anheben bzw. Absenken des Chargierrohres 3 den Durchmesser der Schrottsäule 4 im Inneren des Bades einstellen zu können. Das Chargierrohr 3 weist hiebei, um ein ungehindertes Anheben und Abheben desselben zu gewährleisten, im Bereich der Mündung der Aufgabeschurre 5 ein Langloch 6 auf, um ein durch die Aufgabeschurre 5 nicht gehindertes Anheben und Absenken des Chargierrohres 3 zu gewährleisten. Zur Vorwärmung der sich außerhalb des Ofens 1 befindlichen Schrottsäule 4 wird hiebei das im Gegenstrom zur absinkenden Schrottsäule 4 geführte Abgas verwendet, welches in einem konzentrisch zum Chargierrohr geführten weiteren Rohr 7 abgeführt wird. Am Kopf dieses zweiten Rohres 7 befindet sich eine schematisch dargestellte Gasauslaßöffnung 8, aus welcher das Abgas ausgetragen und gegebenenfalls einer weiteren Aufarbeitung bzw. Reinigung zugeführt wird.

Um nun ein Abschmelzen des Chargierrohres 3 im Bereich der Stahlschmelze mit Sicherheit zu vermeiden, wird gleichzeitig mit den Schrottpaketen durch die Aufgabeschurre 5, in nicht näher dargestellter Weise, Kühlluft durch das Chargierrohr eingetragen bzw. eingepreßt, um die Standzeit des Rohres im Bereich der Stahlschmelze zu erhöhen. Darüberhinaus kann das Chargierrohr 3, wie dies schematisch mit 9 angedeutet ist, teleskopisch ausgebildet werden, um eine einfache Höhenverschiebung ohne Anheben des Chargierrohres im Bereich der Aufgabeschurre 5 sicherzustellen.

In den Ofen 1 münden im Bereich des Fußes der Schrottsäule 4 Erdgas/Sauerstoff- bzw. Erdgas/Luft-Brenner 10, mit welchen ein Erhitzen bzw. Aufschmelzen der Schrottsäule 4 erreicht werden soll. Die enner 10 sind hiebei so ausgebildet, daß sie wechselweise mit Erdgas/Luft bzw. Erdgas/Sauerstoff betrieben werden können, oder aber, daß anstelle von Erdgas durch die Brenner 10 nur Sauerstoff oder Sauerstoff und Kohlestaub in den Ofen 1 eingetragen werden kann, wobei in diesem Fall die über Liquidus erhitzte Schrottsäule durch den Abbrand der in den Schrottpaketen enthaltenen Kunststoffe weiter erhitzt und aufgeschmolzen werden. Zur Vervollständigung dieser Verbrennung, und insbesondere zur Verbesserung der Durchmischung des Bades sowie zur Raffination des erhaltenen Stahls, wird hiebei durch den Boden des Ofens 1 über Bodendüsen 11 weiterer Sauerstoff sowie gegebenenfalls brennbare Gase oder Inertgas eingetragen. Der durch die Bodendüsen 11 eingetragene Sauerstoff dient hiebei zur Sicherstellung der vollständigen Verbrennung der mit den Schrottpaketen eingebrachten Kunststoffanteile sowie zur Durchmischung und Raffination bzw. Frischen des Stahlbades. Der Brennraum der Erdgas/Sauerstoff- bzw. Erdgas/Luft-Brenner 10, welcher schematisch mit 12 angedeutet ist, wird durch ein Wehr 13 vom Raffinationsraum 14 des Ofens 1 getrennt. In den Raffinationsraum 14 münden zwei schematisch dargestellte Elektroden 15, welche versetzt zur Schrottsäule 4 bzw. zum Chargierrohr 3 angeordnet sind. Mit den relativ zur Schrottsäule 4 versetzt angeordneten Elektroden 15 wird eine Weiterbehandlung, insbesondere eine Überhitzung und Raffination, des Stahlbades vorgenommen, und es wird durch die Anordnung des Wehrs 13 zwischen dem Brennraum 12 und dem Raffinationsraum 14 sichergestellt, daß die Weiterbehandlung bzw. Raffination nicht durch den Einschmelzprozeß beeinträchtigt wird, sowie die Elektrode durch herabfallenden Schrott beschädigt wird. Das in dem Raffinationsraum 14 weiterbehandelte Stahlbad wird in der Folge kontinuierlich durch die Abstichsöffnung 16 aus dem Ofen 1 ausgetragen.

In Fig.2, in welcher die Bezugszeichen von Fig.1 beibehalten wurden, ist deutlich ersichtlich, daß eine Mehrzahl von Brennern 10 in vorteilhafter Weise halbkreisförmig um das Chargierrohr 3 angeordnet sind, um hier eine möglichst gleichmäßige Erhitzung der niedergehenden Schrottsäule sicherzustellen. Die räumliche Trennung der Elektroden 15 von den Brennern 10, mit Hilfe des Wehrs 13, kann ebenfalls gut ersehen werden. Durch die Anordnung des Wehrs 13 zwischen den Elektroden 15 und den Brennern 10 wird der Ofen 1 in deutlich unterschiedliche Bereiche getrennt, von welchen im Bereich 12, wie bereits ausgeführt, der Einschmelzprozeß stattfindet, und im Bereich 14 der Raffinations-, Frisch- bzw. Weiterbehandlungsprozeß stattfindet. Durch die nahezu konzentrische Anordnung der Bodendüsen im gesamten Bereich des Ofens wird sichergestellt, daß eine gute Durchwirbelung des Stahlbades stattfindet. Des weiteren wird sichergestellt, daß ausreichend Sauerstoff zum vollständigen Abbrand der in den Schrottpaketen enthaltenen Kunststoff anteile zur Verfügung gestellt wird, so daß mit Sicherheit toxische Pyrolysegase aus dem Kunststoff in dem Ofen 1 vermieden werden. Des weiteren kann für eine vollständige Raffination bzw. ein Frischen erforderliche Sauerstoff über die Bodendüsen 11 eingetragen werden.

## Patentansprüche

1. Verfahren zum Einschmelzen von Schrott, insbesondere von Autoschrott, bei welchem die Charge stückig bzw. als Pakete durch ein einen geschlossenen Deckel (2) durchsetzendes Chargierrohr bzw. Zuführungsrohr (3) aufgegeben wird, wobei auf eine hierdurch gebildete Schrottsäule (4) Brenner (10) gerichtet sind und die Abgase und Pyrolysegase konzentrisch zur Schrottzuführung abgezogen werden, sowie exzentrisch zur Schrottzuführung Elektroden (15) zur Erhitzung des Schmelzbades vorgesehen sind, dadurch gekennzeichnet, daß die Schrottsäule (4) im Inneren des Ofens (1) durch Anheben und Absenken eines Chargierrohres (3) in bezug auf ihren Durchmesser in Abhängigkeit von der Reaktivität der organischen Bestandteile derart eingestellt wird, daß zu Beginn des Schmelzprozesses mit den Gas- oder Kohlenstaubbrennern (10) die Schrottsäule (4) soweit erhitzt wird, daß anschließend die organischen Anteile durch Erhöhen der Sauerstoffmenge verbrannt werden und durch die Verbrennung ein Schmelzen des Schrottes erfolgt, und daß die Schmelze anschließend im Bereich der relativ zur Schrottsäule (4) versetzt angeordneten Elektroden (15) weiterbehandelt bzw. raffiniert wird.

2. Verfahren nach Anspruch 1, dadurch gekennzeichnet, daß im Gleichstrom mit dem Schrott Kühlluft durch das Chargierrohr (3) geführt wird.

3. Verfahren nach Anspruch 1 oder 2, dadurch gekennzeichnet, daß das zu Beginn des Schmelzprozesses zugeführte Brenngas bzw. der Kohlenstaub nach Erreichen einer Temperatur, welche für die Verbrennung des Kunststoffanteiles ausreicht, vollständig durch Sauerstoff ersetzt wird.

4. Verfahren nach Anspruch 1, 2 oder 3, dadurch gekennzeichnet, daß zusätzlicher Sauerstoff sowie gegebenenfalls Inertgase oder brennbare Gase, insbesondere zur Badumwälzung im Bereich der Elektroden (15), über Bodendüsen (11) eingeblasen wird.

5. Verfahren nach einem der Ansprüche 1 bis 4, dadurch gekennzeichnet, daß die auf die Charge gerichteten Brenner (10) auf die Oberfläche der Schmelze gerichtet sind.

6. Vorrichtung zur Durchführung des Verfahrens nach einem der Ansprüche 1 bis 5, mit einem Ofen (1), dessen geschlossener Deckel (2) von einem Rohr (3) zur Zuführung von Schrott durchsetzt ist und mit exzentrisch zum Zuführungsrohr (3) angeordneten Elektroden (15) zur Erhitzung des Schmelzbades, wobei auf eine durch das Rohr (3) gebildete Schrottsäule (4) Brenner (10) gerichtet sind und die Abgase und Pyrolysegase konzentrisch zur Schrottzuführung abgezogen werden, dadurch gekennzeichnet, daß das den Deckel (2) durchsetzende Zuführungsrohr (3) mit einem Antrieb zur Höhenverstellung der Unterkante des Zuführungsrohres verbunden ist und in einer Glocke bzw. einem dichtend an den Deckel (2) angeschlossenen Außenrohr geführt ist, an welche(s) eine Gasabzugsleitung angeschlossen ist.

7. Vorrichtung nach Anspruch 6, dadurch gekennzeichnet, daß im Ofen (1) zwischen der Achse des Zuführungsrohres (3) und den Elektroden (15) eine Barriere bzw. ein Wehr (13) angeordnet ist, welche(s) in das Schmelzbad eintaucht und sich im wesentlichen diametral erstreckt.

8. Vorrichtung nach Anspruch 6 oder 7, dadurch gekennzeichnet, daß Brenner (10) bzw. Lanzen zur Achse des Zuführungsrohres (3) unterhalb der tiefsten Stellung der Unterkante des höhenverstellbaren Bereiches des Zuführungsrohres (3,9) gerichtet sind.

9. Vorrichtung nach Anspruch 6, 7 oder 8, dadurch gekennzeichnet, daß die Brenner (10) bzw. Lanzen vorzugsweise im Halbkreis um die Achse des Zuführungsrohres (3) an der den Elektroden (15) abgewandten Seite desselben angeordnet sind.

10. Vorrichtung nach einem der Ansprüche 6 bis 9, dadurch gekennzeichnet, daß das Zuführungsrohr (3) aus relativ zueinander verschiebbaren teleskopierenden Abschnitten (3,9) besteht und gegebenenfalls im Bereich der Mündung einer Aufgabeschurre (5) ein sich in axialer Richtung erstreckendes Langloch (6) aufweist.

11. Vorrichtung nach einem der Ansprüche 6 bis 10, dadurch gekennzeichnet, daß das in Achsrichtung verschiebbare bzw. höhenverstellbare Zuführungsrohr (3) an seinem oberen der Glocke bzw. dem Außenrohr zugewandten Ende durch eine Stirnplatte verschlossen ist.

12. Vorrichtung nach einem der Ansprüche 6 bis 11, dadurch gekennzeichnet, daß an die Schurre (5) eine Druckgas-, insbesondere Druckluftquelle, angeschlossen ist.

## Claims

1. A process for melting scrap, in particular car scrap, in which the charge in lumpy or baled form is charged through a charging tube or supply tube (3) that passes through a closed lid (2), wherein burners (10) are directed onto a thus formed scrap column (4) and the offgases and pyrolysis gases are drawn off concentrical with the scrap supply and electrodes (15) for heating the melt bath are provided eccentrical of the scrap supply, characterized in that the scrap column (4) in the interior of the furnace (1) by lifting and lowering a charging tube (3) is adjusted in terms of diameter as a function of the reactivity or the organic components in a manner that, at the beginning of the melting process, the scrap column (4) by means of the gas or coal dust burners (10) is heated to such an extent that the organic portions subsequently are burnt by increasing the amount of oxygen and melting of the scrap is effected by said burning, and that the melt subsequently is further treated and/or refined in the region of the electrodes (15) arranged in an offset manner relative to the scrap column (4).

2. A process according to claim 1, characterized in that cooling air is conducted through the charging tube (3) in cocurrent flow with the scrap.

3. A process according to claim 1 or 2, characterized in that the combustion gas or coal dust, respectively, fed at the beginning of the melting process is completely replaced with oxygen after having reached a temperature sufficient for burning the portion of plastics.

4. A process according to claim 1, 2 or 3, characterized in that additional oxygen as well as, if desired, inert gases or combustible gases, are blown in through bottom tuyeres (11), in particular for circulating the bath in the region of the electrodes (15).

5. A process according to any one of claims 1 to 4, characterized in that the burners (10) directed onto the charge are directed onto the surface of the melt.

6. An arrangement for carrying out the process according to any one of claims 1 to 5, comprising a furnace (1) through whose closed lid (2) a tube (3) for supplying scrap passes, and electrodes (15) arranged eccentrical of the supply tube (3) for heating the melt bath, burners (10) being directed onto a scrap column (4) formed by means of the tube (3) and the offgases and pyrolysis gases being drawn off concentrical with the scrap supply, characterized in that the supply tube (3) passing through the lid (2) is connected with an actuating means for adjusting the height of the lower edge of the supply tube and is guided within a bell or an external tube sealingly connected to the lid (2) and to which a gas discharge duct is connected.

7. An arrangement according to claim 6, characterized in that a barrier or weir (13) is arranged within the furnace (1) between the axis of the supply tube (3) and the electrodes (15), which barrier or weir is immersed in the melt bath, extending substantially diametrical.

8. An arrangement according to claim 6 or 7, characterized in that burners (10) or lances are directed towards the axis of the supply tube (3) below the lowermost position of the lower edge of the height-adjustable region of the supply tube (3, 9).

9. An arrangement according to claim 6, 7 or 8, characterized in that the burners (10) or lances preferably are arranged in a semi-circle about the axis of the supply tube (3) on its side facing away from the electrodes (15).

10. An arrangement according to any one of claims 6 to 9, characterized in that the supply tube (3) is comprised of telescopic sections (3, 9) capable of being displaced relative to one another and, if desired, in the region of the mouth of a charging chute (5) has an elongated hole (6) extending in the axial direction.

11. An arrangement according to any one of claims 6 to 10, characterized in that the supply tube (3) displaceable in the axial direction and/or adjustable in height is closed by an end plate on its upper end facing the bell or the external tube, respectively.

12. An arrangement according to any one of claims 6 to 11, characterized in that a source of compressed gas, in particular compressed air, is connected to the chute (5).

## Revendications

1. Procédé pour la fonte de ferrailles, en particulier d'épaves d'auto dans lequel la charge est alimentée en morceaux ou comme paquets par l'intermédiaire d'un tuyau de chargement (3) ou d'un tuyau d'alimentation traversant un couvercle fermé (2), des brûleurs (10) étant dirigés vers une colonne de ferrailles (4) constituée de cette façon et les gaz d'échappement et les gaz de pyrolyse étant soustraits de façon concentrique par rapport à l'alimentation en ferrailles, ainsi que des électrodes (15) sont prévues excentriques par rapport à l'alimentation en ferrailles pour le réchauffement du bain de fusion, caractérisé en ce que la colonne de ferrailles (4) à l'intérieur du four (1) est réglée par le déplacement vers le haut ou vers le bas d'un tuyau de chargement (3) par rapport à son diamètre en fonction de la réactivité des composants organiques de façon qu'au début de la fusion, la colonne de ferrailles (4) est chauffée avec des brûleurs à gaz ou à poussière de charbon (10) dans une telle mesure, qu'ensuite les éléments organiques sont brûlés par l'augmentation de la quantité d'oxygène et qu'une fonte de la ferraille est effectuée par la combustion, et que la masse fondue est ensuite traitée ou raffinée dans la zone des électrodes (15) disposées de façon décalée par rapport à la colonne de ferrailles (4).

2. Procédé selon la revendication 1, caractérisé en ce que de l'air de refroidissement est conduit par le tuyau de chargement (3) dans un écoulement direct avec la ferraille.

3. Procédé selon l'une quelconque des revendications 1 ou 2, caractérisé en ce que le gaz combustible ou la poussière de charbon introduit au début de la fusion est complètement remplacé par de l'oxygène une fois qu'une température suffisante est atteinte pour la combustion des éléments plastiques.

4. Procédé selon l'une quelconque des revendications 1, 2 ou 3, caractérisé en ce que de l'oxygène complémentaire ainsi que le cas échéant des gaz inertes ou des gaz combustibles, en particulier pour la circulation du bain dans la zone des électrodes (15), sont injectés par l'intermédiaire de buses de sol (11).

5. Procédé selon l'une quelconque des revendications 1 à 4, caractérisé en ce que les brûleurs (10) dirigés sur la charge sont dirigés sur la surface de la masse fondue.

6. Dispositif pour la réalisation du procédé selon l'une quelconque des revendications 1 à 5, avec un four (1), dont le couvercle fermé (2) est traversé par un tuyau (3) pour l'alimentation en ferrailles et avec des électrodes (15) disposées de façon excentrique par rapport au tuyau d'alimentation (3) pour le réchauffement du bain de fusion, des brûleurs (10) étant dirigés sur une colonne de ferrailles (4) formée par le tuyau (3) et les gaz d'échappement et les gaz de pyrolyse étant soustraits de façon concentrique par rapport à l'alimentation en ferrailles, caractérisé en ce que le tuyau d'alimentation (3) traversant le couvercle (2) est relié à un entraînement pour le réglage de la hauteur du bord inférieur du tuyau d'alimentation et conduit dans une cloche ou dans un tuyau extérieur relié de façon étanche au couvercle (2) et sur laquelle (lequel) est connecté un conduit d'évacuation de gaz.

7. Dispositif selon la revendication 6, caractérisé en ce que dans le four (1), entre l'axe du tuyau d'alimentation (3) et les électrodes (15), une barrière ou un barrage (13) est disposé(e), laquelle (lequel) plonge dans le bain de fusion et s'étend en substance diamétralement.

8. Dispositif selon l'une quelconque des revendications 6 ou 7, caractérisé en ce que les brûleurs (10) ou les lances sont dirigé(e)s par rapport à l'axe du tuyau d'alimentation (3) en dessous de la position la plus basse du bord inférieur de la zone réglable en hauteur du tuyau d'alimentation (3, 9).

9. Dispositif selon l'une quelconque des revendications 6, 7 ou 8, caractérisé en ce que les brûleurs (10) ou les lances sont disposé(e)s de préférence sur un demi-cercle autour de l'axe du tuyau d'alimentation (3) sur le côté de celui-ci opposé aux électrodes (15).

10. Dispositif selon l'une quelconque des revendications 6 à 9, caractérisé en ce que le tuyau d'alimentation (3) est composé de segments télescopiques qui peuvent coulisser les uns par rapport aux autres (3, 9) et présente, le cas échéant, un trou longitudinal (6) qui s'étend dans le sens axial dans la zone de l'ouverture d'une goulotte de chargement (5).

11. Dispositif selon l'une quelconque des revendications 6 à 10, caractérisé en ce que le tuyau d'alimentation (3) qui peut être déplacé dans le sens axial ou qui peut être réglé en hauteur, est fermé à son extrémité supérieure tournée vers la cloche ou le tuyau extérieur par une plaque avant.

12. Dispositif selon l'une quelconque des revendications 6 à 11, caractérisé en ce que sur la goulotte (5), il est connecté une source de gaz comprimé, en particulier de l'air comprimé.
